# EUROPEAN PATENT APPLICATION

(11) **EP 3 514 681 A1**
(43) Date of publication of application: **24.07.2019**
(21) Application number: 18152783.9
(22) Date of filing: 22.01.2018
(51) Int. Cl.: G06F 8/76

(54) **METHOD, HOST DEVICE AND SYSTEM FOR PROVIDING APPLICATIONS**

(71) Applicant: Robert Bosch GmbH, 70442 Stuttgart (DE)
(72) Inventor: Plappert, Christian, 71277 Rutesheim (DE); Lagerstedt, Robert, 223 63 Lund (SE)

(57) **Abstract**

The invention provides a method for providing applications from a host device (2) to a target device (3), comprising the following steps: converting a web application to a native application by the host device (2); and transferring the native application to the target device (3).

## Description

The present invention relates to a method for providing applications from a host device to a target device. The invention further relates to a host device for providing applications to a target device. Finally, the invention relates to a system for providing applications.

### Prior art

The original concept underlying web technology was to provide user interfaces (UI) based on data created on a host device or server which is transmitted to the respective clients or target devices.

Initially, the computing power of the clients was significantly lower than the computing power of the servers. Accordingly, the protocol mostly contained elements such as Hypertext Markup Language (HTML) files. With HTML, images and other objects, such as interactive forms, can be embedded into the rendered page. HTML provides a means to create structured documents, including formatting of text.

To simplify the styling of the user interface elements, additional standard stylesheet formats were added. Cascading style sheets (CSS) are used for describing the presentation of the document which is written in a markup language such as HTML. By using CSS files, the presentation can be separated from the content which can improve the accessibility of the content and provide more flexibility and control in the specification of presentation characteristics. Further, it is easier to share formatting of multiple HTML pages.

A third cornerstone of World Wide Web content production is JavaScript (JS). By including JavaScript files, webpages can become interactive and provide online programs, such as video games. Especially with increasing computing power of the clients or target devices, some of the software, especially business or user interface logic, is no longer executed on the server itself but instead directly on the target device.

The respective web applications are directly executed in a browser. The browser communicates with the host device in order to receive the HTML files, CSS files and JavaScript files. The browser parses the files, renders the user interface and executes the code.

Often, the same content is transferred to a plurality of devices having different specifications. Accordingly, it may be advantageous to adjust a web application to comply with the user interface capabilities of the target device. An exemplary method for adjusting web applications is known from US 2015/0378579 A1.

### Disclosure of the invention

The invention provides a method for providing applications from a host device to target device as recited in claim 1, a host device for providing applications to a target device as recited in claim 9, and a system for providing applications as recited in claim 10.

According to a first aspect, the invention therefore provides a method for providing applications from a host device to a target device. A web application is converted to a native application by the host device. Further, the native application is transferred to the target device.

According to a second aspect, therefore, the invention provides a host device for providing applications to a target device. The host device comprises a conversion unit which is adapted to convert a web application to a native application. The device further comprises an interface which is adapted to transfer the native application to the target device.

According to a third aspect, the invention provides a system for providing applications, comprising a host device and a target device which is adapted to receive a native application generated by the host device.

Preferred embodiments are laid out in the dependent claims.

### Advantages of the invention

According to the invention, a native application is generated which is specifically designed for the respective target device. Instead of adjusting a web application which is still executed in a sandboxed runtime environment, the invention provides a native application which may be executed on the target device without the requirement of a browser. The native application is adjusted to the specifications of the target device. Additionally, no real-time parsing is required which significantly increases the speed and performance of the application. Moreover, much of the functionalities of the browser are often not needed. The invention helps to avoid browsers altogether.

The specific generation of native applications is particularly useful if the application is provided to a large plurality of target devices having identical operating systems. For example, if all target devices comprise UNIX based operating systems, such as Linux distributions, only a single native application is to be generated and can be provided to all of the target devices.

However, according to further embodiments, the target device may also provide information regarding the operating system of the target device to the host device. Based on the information regarding the operating system of the target device, the host device can specifically generate a native application designed for the operating system of the host device. According to some embodiments, the host device may already have access to information regarding the operating systems of the target devices. For example, the host device may comprise a storage unit having a lookup table which provides information about the operating system for each target device in a network. Therefore, if the target device requests certain applications, it may also transmit information regarding the type or identity of the target device. Based on the information regarding the type or identity of the target device, the host device may determine the corresponding operating system of the target device based on the lookup table. The native application is then generated based on the determined operating system.

According to a further embodiment of the invention, the native application is executed on the target device. The target device will generally not require any additional tools, such as a browser for executing the native application. Particularly, the native application is not executed in a sandboxed runtime environment but instead directly executed in the operating system of the target device.

According to a preferred embodiment of the method, the web application comprises at least one HTML file and/or at least one CSS file and/or at least one JavaScript file.

The native application may be generated in any predetermined programming language. The native application may be a program having a main routine and a series of additional functions. For example, the HTML file can be converted to a render function of the native application. When the native application is executed, the render function may determine the content to be displayed. The render function may especially comprise any text-based information. The render function may also comprise the numbers of certain interaction elements, such as buttons, forms and selection elements.

The CSS file may be converted to a style function of the native application. When the native application is executed on the target device, the style function may determine the specific way of presenting the information determined in the render function. For instance, the style function may comprise information about colors of buttons.

The JavaScript file may be converted to an action function of the native application. When the native application is executed on the target device, the action function may determine specific actions to be performed. For instance, the action function may determine the actions which are to be executed if a user clicks on certain buttons or enters information into forms.

According to a preferred embodiment of the method, the target device is an embedded device. For example, the target device may be a mobile device such as a portable computer or cell phone. According to further embodiments, the target device may be a non-mobile or stationary device. For example, the target device may be a home appliance or an element of a home appliance such as a refrigerator display, a kitchen device or a robotic vacuum cleaner. The target device may also be an electronic instrument cluster, for example a car display. The skilled person will appreciate that the invention is applicable to all kinds of mobile and stationary devices.

According to a further embodiment of the method, the native application is compiled on the host device. Therefore, a readily compiled native application is provided to the target device. Since the computing power of the host device generally exceeds the computing power of the target devices, the native application may be compiled in a very short time, therefore increasing the performance.

However, according to a further embodiment of the method, the native application may also be compiled on the target device. This embodiment may be useful if the target devices have sufficient computing power. The requirements on the host device can be reduced.

### Brief description of the drawings

The following, exemplary embodiments of the invention are explained in more detail with reference to the accompanying drawing figures, in which like reference signs refer to similar or the same elements and in which:
- Fig. 1: shows a schematic block diagram of a system for providing applications according to an embodiment of the invention;
- Fig. 2: shows a schematic block diagram of a host device for providing applications to a target device according to an embodiment of the invention;
- Fig. 3: shows a schematic illustration of a conversion of a web application to a native application according to an embodiment of the invention;
- Fig. 4: shows a schematic illustration of a conversion of a web application to a native application according to a further embodiment of the invention; and
- Fig. 5: shows a flowchart of a method for providing applications from a host device to a target device according to an embodiment of the invention.

### Description of the embodiments

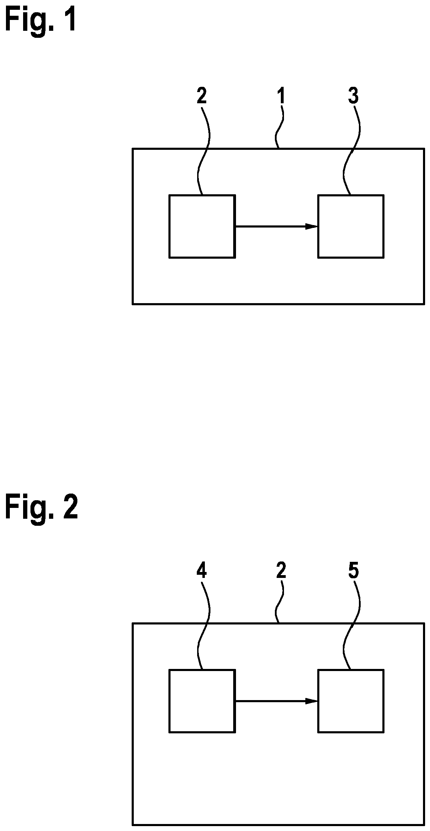

Figure 1 shows a schematic block diagram of an exemplary network or system 1 for providing applications. The system 1 comprises at least one client or target device 3 which is adapted to exchange information with a server or host device 2 of the system 1. Generally, the system 1 will comprise a plurality of target devices 3 connected to the host device 2. For example, the target devices 3 may be portable devices such as cell phones or portable computers.

The target device 3 is adapted to provide information to a user on a display of the target device 3. The target device 3 comprises a computing unit with at least one CPU which is adapted to process the information received by the host device 2. The target device 3 has a certain operating system, such as Microsoft Windows, Linux or Mac OS. The target device 3 also further comprises an interface for exchanging data with the host device 2.

The host device 2 is adapted to convert web applications to native applications and to transfer the native applications to the target device 3.

An exemplary host device 2 is shown in a schematic block diagram in figure 2. The host device 2 comprises an interface 5 which is adapted to exchange data with the target device 3. The host device 2 further comprises a conversion unit 4.

The target device 3 may send a request to the interface 5 of the host device 2. The conversion unit 4 will process the request by identifying the required web application. The web application may comprise HTML, CSS and JavaScript files which are stored on the host device 2. The conversion unit 4 will generate a native application based on the web application. The native application is specifically adapted to the operating system of the target device 3. A native application is a software application compiled to the target architecture of the target device. The native application is not executed in a browser but instead running in the base operating system.

According to an embodiment, the conversion unit 4 will know the type of operating system of the target device 3 already in advance. For example, all target devices 3 may comprise the same operating system. The target device 3 may also transmit identification information regarding the type of the operating system of the target device 3 to the host device 2.

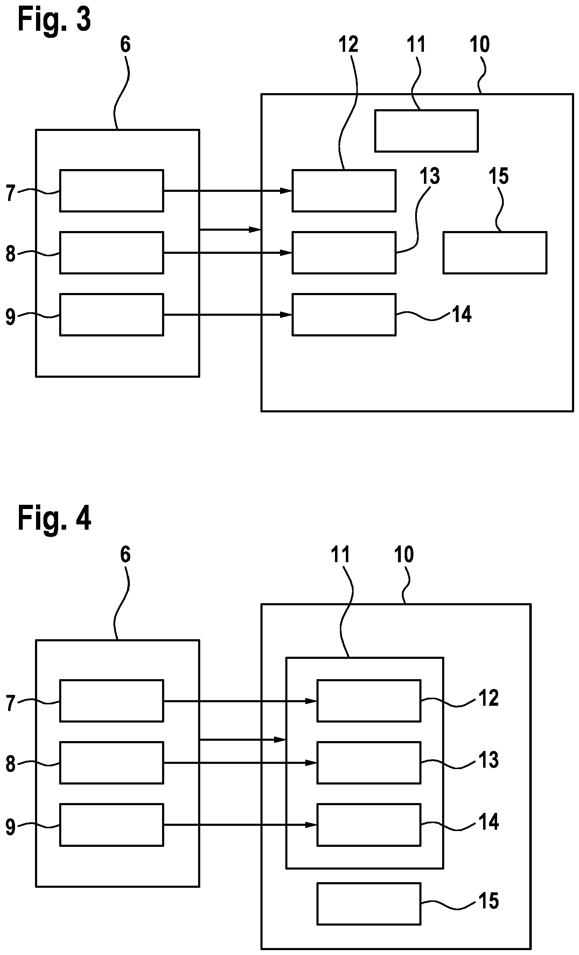

Figure 3 shows an exemplary conversion of a web application 6 to a native application 10. The web application 6 comprises a markup file 7 which is preferably an HTML file. The markup file 7 contains information about the content to be displayed. For example, the markup file 7 may comprise information about buttons, text boxes, search boxes or forms.

The web application 6 further comprises a stylesheet 8, preferably a CSS file. The stylesheet 8 will contain information of the specific way of presenting the information to the user. For example, the stylesheet 8 may comprise information about the colors of the buttons, the font type and font size of the text or the size of margins or borders.

Further, the web application 6 comprises a JavaScript file 9 comprising dynamic content which allows interaction with the user.

The conversion unit 4 generates the native application 10 based on the web application 6. The native application 10 may be a source code file written in any desired programming language. The type of programming language may depend on the operating system of the target device 3. The native application 10 may comprise a compilable main file 11 to be executed when running the native application 10 on the target device 3. The native application 10 further comprises a compilable render function 12 which is generated based on the markup file 7. Further, a compilable style function 13 of the native application 10 is generated based on the stylesheet 8. Finally, a compilable action function 14 is generated based on the JavaScript file 9. The native application 10 may further comprise additional functions 15, such as platform functions for implementing certain interactions with hardware of the target device 3, such as microphones or keyboards.

Whereas the main function 11 may be distinct from the render function 12, the style function 13 and the action function 14, these functions may also be implemented into the main function 11, as shown in figure 4.

According to further embodiments, the stylesheet 8 may be used for converting the markup file 7 to the render function 12. Therefore, no additional style function 13 is necessary, which further increases the performance.

The conversion of the web application 6 to the native application 10 may be performed using the Rust source code language and using OpenGL to render the scene-graph.

Further, additional source code may be added for handling the main function, function routing and the needed platform APIs.

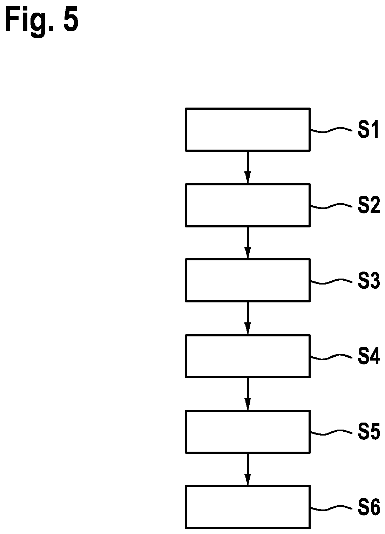

Figure 5 shows a flowchart of a method for providing applications from a host device 2 to a target device 3.

In a first method step S1, the target device 3 sends a query to the host device 2. The query may comprise a requested application to be executed on the target device 3. The query may also comprise information about the operating system of the target device 3. According to a further embodiment, the query may comprise information about the type or specification of the target device 3.

In method step S2, the host device 2 receives the query over an interface 5. The host device 2 processes the query by identifying a requested web application. The host device 2 further identifies the operating system of the target device 3. According to an embodiment, the type of operating system is transmitted directly in the query. According to a further embodiment, all target devices 3 have the same operating system, such as Linux. Further, the host device 2 may identify the type of operating system of the target device 3 based on the transmitted information of the type or specifications of the target device 3.

Steps S1 and S2 are optional. According to further embodiments, the host device 2 transmits native applications to the target device 3 without any data being transmitted from the target device 3 to the host device 2.

In method step S3, the host device 2 generates a native application by converting the requested web application. As described above, the host device 2 may convert HTML files, CSS files and/or JavaScript files of the web application to respective render functions, style functions and action functions of the native application.

In method step S4, the host device 2 compiles the native application in order to generate a compiled native application which is executable on the operating system of the target device 3.

In step S5, the compiled native application is transferred to the target device 3 over respective interfaces. Preferably, the native application is transmitted over a wireless network to the target device 3.

In step S6, the target device 3 will execute the compiled native application. Content may be displayed to a user of the target device 3. The user may also interact with the native application by entering information or pushing buttons. The action of the user triggers certain functions defined in the native application based on the original JavaScript file.

According to further embodiments, steps S4 and S5 may be inverted. That is to say, the uncompiled native application is transferred to the target device 3. The target device 3 will then compile the native application in order to generate an executable native application.

## Claims

1. A method for providing applications from a host device (2) to a target device (3), comprising the following steps:
converting a web application to a native application by the host device (2); and
transferring the native application to the target device (3).

2. The method according to claim 1, wherein the native application is designed for an operating system of the host device (2).

3. The method according to claim 1 or 2, wherein the native application is executed on the target device (3).

4. The method according to any of the preceding claims, wherein the web application comprises at least one of an HTML file, a CSS file, or a JavaScript file.

5. The method according to claim 4, wherein the HTML file is converted to a render function of the native application, wherein the CSS file is converted to a style function of the native application, and wherein the JavaScript file is converted to an action function of the native application.

6. The method according to any of the preceding claims, wherein the target device (3) is an embedded device.

7. The method according to any of the preceding claims, wherein the native application is compiled on the host device (2).

8. The method according to any of claims 1 to 6, wherein the native application is compiled on the target device (3).

9. A host device (2) for providing applications to a target device (3), comprising:
a conversion unit (4) which is adapted to convert a web application to a native application, and
an interface (5) which is adapted to transfer the native application to the target device (3).

10. A system (1) for providing applications, comprising:
a host device (2) according to claim 9; and
a target device (3) adapted to receive a native application generated by the host device (2).
